(19) Europäisches Patentamt / European Patent Office / Office européen des brevets

(11) **EP 3 305 549 A1**

(12) **EUROPEAN PATENT APPLICATION**
published in accordance with Art. 153(4) EPC

(43) Date of publication:
**11.04.2018 Bulletin 2018/15**

(51) Int Cl.:
**B60C 9/00** *(2006.01)*    **B60C 9/04** *(2006.01)*
**B60C 13/00** *(2006.01)*    **D02G 3/26** *(2006.01)*
**D02G 3/48** *(2006.01)*

(21) Application number: **16800004.0**

(22) Date of filing: **24.05.2016**

(86) International application number:
**PCT/JP2016/065284**

(87) International publication number:
**WO 2016/190299 (01.12.2016 Gazette 2016/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.05.2015 JP 2015107723**

(71) Applicant: **The Yokohama Rubber Co., Ltd.
Minato-ku
Tokyo 105-8685 (JP)**

(72) Inventor: **TAKENAKA, Yuichi
Hiratsuka City
Kanagawa 254-8601 (JP)**

(74) Representative: **Dilg, Haeusler, Schindelmann
Patentanwaltsgesellschaft mbH
Leonrodstrasse 58
80636 München (DE)**

(54) **PNEUMATIC TIRE**

(57) A pneumatic tire has a tire skeleton portion in which a plurality of arranged reinforcing cords are covered by a rubber layer. The reinforcement cords are organic fiber cords formed from polyethylene terephthalate. The organic fiber cords have an intermediate elongation (2.0 cN/dtex) of 3.0% to 4.0%, a dimensional stability index of 5.0% to 6.5%, and a difference between an elongation ratio at a strength at 70% the strength at the time of breaking and an elongation ratio at the time of breaking in a strength-elongation curve of 11% to 16%.

FIG. 1

## Description

Technical Field

The present invention relates to a pneumatic tire in which a tire skeleton portion includes a plurality of arranged reinforcing cords covered by a rubber layer, and particularly relates to a pneumatic tire that ensures external damage resistance of a tire side portion while steering stability is maintained.

Background Art

Conventionally, various substances, such as rayon, polyethylene terephthalate (PET), and polyethylene naphthalate (PEN), have been used for reinforcing cords used for a carcass layer, in pneumatic tires for passenger vehicles. Currently, reduction in environmental impact is a technical problem in production of pneumatic tires, and in particular, examples thereof include use of recycled resources and resource saving. From the perspective of use of recycled resources, cellulose fibers, such as rayon, are exemplified; however, from the perspective of environmental impact during production process of raw materials, PET is more preferable since rayon uses carbon disulfide.
Furthermore, to save resources, reduction in weight of tires is exemplified. Currently, although rayon has been used as reinforcing cords for tires, use of PET having a higher strength as the reinforcing cords is preferable. In addition, it is effective to reduce the thickness of a tire side portion (tire side gauge) of a pneumatic tire.

Citation List

Patent Literature

    Patent Document 1: JP 3848763 B
    Patent Document 2: JP 2011-011594 A

Summary of Invention

Technical Problem

However, as indicated in Patent Document 1, when PET is used in a reinforcing cord, since decrease in modulus at high temperatures is large, problems occur in steering stability during traveling at high speeds. Furthermore, Patent Document 2 describes a pneumatic tire using a single-direction twisted cord as a carcass cord constituting a carcass layer. In the pneumatic tire of Patent Document 2, the carcass cord is formed from a single-direction twisted cord obtained by twisting a polyester fiber multifilament yarn in one direction, the polyester fiber multifilament yarn having a strength of at least 8 cN/dtex, a toughness index G represented by Equation $G = T \times E^{1/2}$ (T is strength (cN/dtex) and E is elongation at break (%)) of 25 or greater, a single fiber linear mass density of 4.5 to 8.5 dtex, and a degree of intermingle of 5 tangles/m or less. In this case, although weight reduction can be achieved without deteriorating durability, steering stability and external damage resistance of the tire side portion are not described. In the case where PET is used as a reinforcing cord, currently, there is no reinforcing cord that aims to achieve both steering stability and external damage resistance of a tire side portion.
An object of the present invention is to provide a pneumatic tire that solves the problems of conventional technologies and that ensures external damage resistance of a tire side portion while steering stability is maintained.

Solution to Problem

To achieve the object described above, the present invention provides a pneumatic tire having a tire skeleton portion in which a plurality of arranged reinforcing cords are covered by a rubber layer; the reinforcing cords being organic fiber cords formed from polyethylene terephthalate; and the organic fiber cords having an intermediate elongation (2.0 cN/dtex) of 3.0% to 4.0%, a dimensional stability index, which is represented as a sum of a dry heat shrinkage (%) and an intermediate elongation (2.0 cN/dtex) (%) at 150°C, of 5.0% to 6.5%, and a difference between an elongation ratio at a strength at 70% the strength at the time of breaking and an elongation ratio at the time of breaking in a strength-elongation curve of 11% to 16%.
In this case, the organic fiber cord preferably has a twist coefficient of 1700 to 2100.
Furthermore, the rubber layer preferably has a storage modulus of 7.0 MPa to 9.0 MPa. For example, the rubber thickness of a side tread at a maximum width position of a tire side is from 1.0 mm to 2.5 mm.

Advantageous Effects of Invention

According to the pneumatic tire of the present invention, by the configuration described above, external damage resistance of a tire side portion can be ensured while steering stability is maintained.

Brief Description of Drawings

FIG. 1     is a cross-sectional view illustrating a cross-sectional shape of a pneumatic tire of an embodiment of the present invention.

FIG. 2     is a schematic cross-sectional view illustrating an example of a configuration of a carcass layer of a pneumatic tire of an embodiment of the present invention.

FIG. 3     is a graph showing the strength-elongation curve that is represented by the strength and the elongation of an organic fiber cord of a pneumatic tire of an embodiment of the present invention.

Description of Embodiments

The pneumatic tire of the present invention is described in detail below using preferable embodiments illustrated in the accompanying drawings.

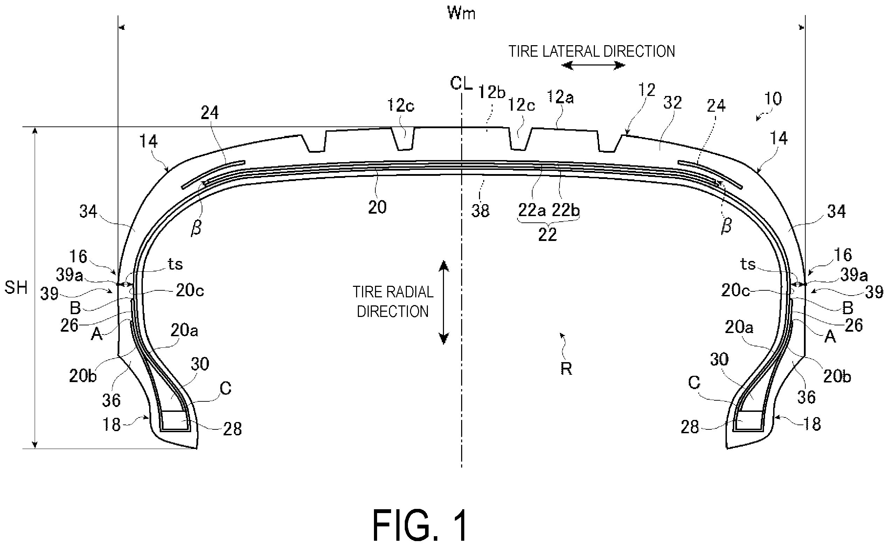

FIG. 1 is a cross-sectional view illustrating a cross-sectional shape of a pneumatic tire of an embodiment of the present invention.

A pneumatic tire illustrated in FIG. 1 (hereinafter, simply referred to as "tire") 10 has a tread portion 12, shoulder portions 14, sidewall portions 16, and bead portions 18 as major constituents.

In the description below, "tire lateral direction" refers to a direction parallel with a rotation axis (not illustrated) of the tire as indicated by an arrow in FIG. 1, and "tire radial direction" refers to a direction orthogonal to the rotation axis. "Tire circumferential direction" refers to the rotating direction with the rotation axis as the axis at the center of rotation.

Furthermore, "tire inner side" refers to a tire inner side that is the bottom side of the tire in the tire radial direction in FIG. 1 and that faces a cavity region R by which a predetermined internal pressure is applied to the tire. "Tire outer side" refers to a tire outer side that is the upper side of the tire in FIG. 1 and that is located on the opposite side of the tire inner side and thus can be seen by a user.

The tire 10 mainly has a carcass layer 20, a belt layer 22, belt auxiliary reinforcing layers 24, side reinforcing layers 26, bead cores 28, bead fillers 30, a tread rubber layer 32, sidewall rubber layers 34, rim cushion rubbers layer 36, and an innerliner rubber layer 38.

Land portions 12b forming a tread surface 12a of the tire outer side and tread grooves 12c formed in the tread surface 12a are provided in the tread portion 12. The land portions 12b are defined by the tread grooves 12c. The tread grooves 12c include main grooves formed continuously in the tire circumferential direction and a plurality of lug grooves (not illustrated) extending in the tire lateral direction. A tread pattern is formed in the tread surface 12a by the tread grooves 12c and the land portions 12b.

The carcass layer 20 forms the skeleton of the tire and extends in the tire lateral direction, from a portion corresponding to the tread portion 12 through portions corresponding to the shoulder portion 14 and the sidewall portion 16 to the bead portion 18.

The carcass layer 20 has a structure in which reinforcing cords are arranged as described in detail below and coated with a cord coating rubber. The carcass layer 20 is folded over the pair of left and right bead cores 28 (described below) from the tire inner side to the tire outer side to form an end portion A in a region of the sidewall portion 16, and includes a main portion 20a and a folded over portion 20b that are delimited by the bead core 28. That is, in the present embodiment, one layer of the carcass layer 20 is mounted in between the left-right pair of bead portions 18. The number of the carcass layer 20 is not limited to one layer, and a plurality of layers may be employed depending on the structure and use thereof. In the tire 10 of the present embodiment, the carcass layer 20 preferably has a one layer-structure (one ply) from the perspective of reduction in weight because two or more layers diminish the effect of reducing the weight. Furthermore, the carcass layer 20 may include one sheet material or may include a plurality of sheet materials. When the carcass layer 20 includes a plurality of sheet materials, the carcass layer 20 has a splice (splice portion).

As the cord coating rubber of the carcass layer 20, one type or a plurality of types of rubbers selected from the group consisting of natural rubber (NR), styrene-butadiene rubber (SBR), butadiene rubber (BR), and isoprene rubber (IR) is preferably used. Furthermore, substances obtained by terminal-modifying these rubber with a functional group containing an element, such as nitrogen, oxygen, fluorine, chlorine, silicon, phosphorus, or sulfur, the functional group containing an element being exemplified by amines, amides, hydroxyl, esters, ketones, siloxy, alkylsilyls, and the like, or a substance obtained by terminal-modifying with an epoxy can be used. As the carbon black blended to these rubbers, for example, a carbon black having an iodine adsorption amount of 20 to 100 (g/kg), and preferably from 20 to 50 (g/kg), a DBP absorption of 50 to 135 ($cm^3$/100g), and preferably from 50 to 100 ($cm^3$/100g), and a CTAB adsorption specific surface area of 30 to 90 ($m^2$/g), and preferably from 30 to 45 ($m^2$/g) can be used.

Furthermore, the used amount of the sulfur is, for example, from 1.5 to 4.0 parts by mass, and preferably from 2.0 to 3.0 parts by mass, per 100 parts by mass of the rubber.

Note that the carcass layer 20 is described in detail below.

The belt layer 22 is attached in the tire circumferential direction and is a reinforcing layer for reinforcing the carcass layer 20. The belt layer 22 is provided at a position corresponding to the tread portion 12 and includes an inner side belt layer 22a and an outer side belt layer 22b.

In the present embodiment, the inner side belt layer 22a and the outer side belt layer 22b each include a plurality of reinforcing cords that incline with respect to the tire circumferential direction, and the direction of the reinforcing cords of the different layers intersect each other. In the inner side belt layer 22a and the outer side belt layer 22b, the reinforcing cords are, for example, steel cords and are covered with a cord coating rubber or the like described above.

In the inner side belt layer 22a and the outer side belt layer 22b, the cord angle of the reinforcing cords relative to the tire circumferential direction is, for example, from 24° to 35°, and preferably from 27° to 33°. As a result, the high speed durability can be enhanced.

The inner side belt layer 22a and the outer side belt layer 22b of the belt layer 22 are not limited to those having steel cords as the reinforcing cords. Steel belts may be employed in either one of the inner side belt layer 22a or the outer side belt layer 22b, or conventionally known reinforcing cords formed from organic fiber cords of polyester, nylon, aromatic polyamide, or the like may be employed in at least one of the inner side belt layer 22a or the outer side belt layer 22b.

In the tire 10, belt auxiliary reinforcing layers 24 which reinforce the belt layer 22 are provided in the tire circumferential direction on the outer side belt layer 22b which is the outermost layer of the belt layer 22. In the belt auxiliary reinforcing layers 24, for example, organic fiber cords as the reinforcing cords are arranged spirally in the tire circumferential direction, and these organic fiber cords are covered with the cord coating rubber or the like described above.

The belt auxiliary reinforcing layers 24 are provided in a manner that, for example, the belt auxiliary reinforcing layers 24 only cover end portions β of the belt layer 22, as illustrated in FIG. 1. The belt auxiliary reinforcing layers 24 illustrated in the figure are so-called edge covers.

Note that the belt auxiliary reinforcing layers 24 are not limited to those illustrated in FIG. 1. For example, the belt auxiliary reinforcing layers 24 may be a so-called full cover which covers the belt layer 22 from an end to the other end in the tire lateral direction. Furthermore, the belt auxiliary reinforcing layers 24 may have a structure in which a plurality of layers of full covers are laminated, or may have a structure in which edge shoulders and a full cover are combined.

In the belt auxiliary reinforcing layers 24, for example, nylon 66 (polyhexamethylene adipamide) fibers, aramid fibers, composite fibers formed from aramid fibers and nylon 66 fibers (aramid/nylon 66 hybrid cords), PEN fibers, aliphatic polyketone (POK) fibers, heat-resistant PET fibers, rayon fibers, and the like are used as the organic fiber cords.

The bead core 28 around which the carcass layer 20 is folded and that functions to fix the tire 10 to the wheel is provided in the bead portion 18. Additionally, the bead filler 30 is also provided in the bead portion 18 so as to contact the bead core 28. Therefore, the bead core 28 and the bead filler 30 are sandwiched by the main portion 20a and the folded over portion 20b of the carcass layer 20.

Additionally, the side reinforcing layer 26 that includes the reinforcing cords inclined with respect to the tire circumferential direction is embedded in the bead portion 18.

In this embodiment, the side reinforcing layer 26 is disposed between the main portion 20a of the carcass layer 20 and the bead filler 30 at the bead portion 18, and between the main portion 20a and the folded over portion 20b of the carcass layer 20 at the sidewall portion 16; and extends from the bead core 28 to an end portion B of the shoulder 14 side, farther along the tire radial direction than the end portion A of the folded over portion 20b.

Note that another end portion C of the side reinforcing layer 26 extends in the vicinity of the bead core 28 between the main portion 20a of the carcass layer 20 and the bead filler 6. Additionally, the side reinforcing layer 26 may be disposed between the folded over portion 20b of the carcass layer 20 and the bead core 28 and/or the bead filler 30 at the bead portion 18, and between the main portion 20a and the folded over portion 20b at the sidewall portion 16; or on an outer side in the tire lateral direction of the folded over portion 20b at the bead portion 18 and on an outer side of the main portion 20a at the sidewall portion 16. Furthermore, the side reinforcing layer 26 may be disposed in combinations of these configurations.

The side reinforcing layer 26 has a configuration in which the reinforcing cords formed from the steel cords are arranged at a fixed spacing facing a direction that is inclined with respect to the tire circumferential direction, and are covered with the cord coating rubber or the like described above. As the reinforcing cords of the side reinforcing layer 26, besides steel cords, for example, organic fiber cords formed from polyester, nylon, aromatic polyamide, or the like are also used.

As long as the side reinforcing layer 26 can reinforce the side (side wall) of the tire 10, in other words, the bead portion 18 and/or the sidewall portion 16, the side reinforcing layer 26 may be provided on an entirety or a portion of the bead portion 18 and/or the sidewall portion 16. Moreover, a position of the end portion is not limited. For example, the end portion of the side reinforcing layer 26 may be extended to a region contacting the belt layer 22 of the shoulder portion 14 and be provided on an entirety of the bead portion 18 and the sidewall portion 16. Alternately, the end portion of the side reinforcing layer 26 may be provided only on the bead portion 18 or only on the sidewall portion 16; or, for example, may be divided into multiple portions and provided separately on the bead portion 18 and the sidewall portion 16. Furthermore, the region where the side reinforcing layer 26 is provided may be changed according to the type of reinforcing cord. For example, when a conventionally known steel cord is used as the reinforcing cord of the side reinforcing layer 26, the side reinforcing layer 26 is preferably disposed between the bead filler 30 and the folded over portion 20b of the carcass layer 20; and when an organic fiber cord is used, the side reinforcing layer 26 is preferably disposed so as to envelop the bead core 28 and the bead filler 30.

The tire 10 includes the tread rubber layer 32 that constitutes the tread portion 12, the sidewall rubber layer 34 that constitutes the sidewall portion 16, the rim cushion rubber layer 36, and the innerliner rubber layer 38 provided on the tire inner circumferential surface as other rubber materials.

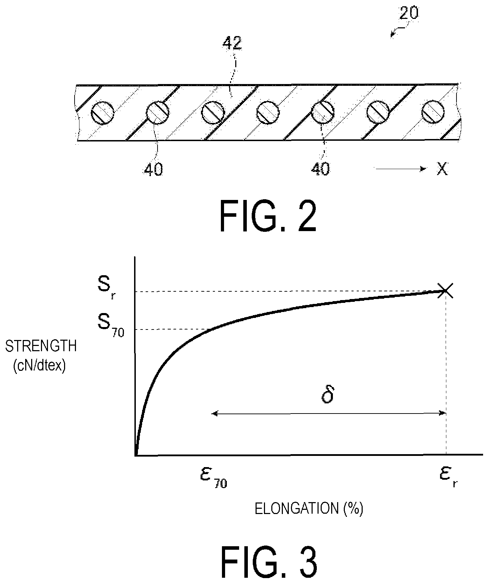

The carcass layer 20 is described in detail below. FIG. 2 is a schematic cross-sectional view illustrating an example of a configuration of a carcass layer of a pneumatic tire of an embodiment of the present invention.
In the carcass layer 20, a plurality of organic fiber cords 40 are arranged in the arrangement direction x as the reinforcing cords, as illustrated in FIG. 2. The organic fiber cords 40 are formed from polyethylene terephthalate (PET). Although it is not illustrated, the organic fiber cords 40 are braided in rattan blind-like form using woof. The plurality of the organic fiber cords 40 are coated by a rubber layer 42 in the condition that the organic fiber cords 40 are braided by the woof. The rubber layer 42 is formed from the cord coating rubber described above. The configuration of the organic fiber cord 40 is not particularly limited, and for example, the organic fiber cord may be a single cord or may be a cord obtained by twisting a plurality of cords.

The organic fiber cord 40 is described in detail below. The organic fiber cord 40 is formed from PET having a high elasticity and a high fracture energy and has the following values of characteristics.
The organic fiber cords 40 have an intermediate elongation (2.0 cN/dtex) of 3.0% to 4.0%. When the intermediate elongation (2.0 cN/dtex) is from 3.0% to 4.0%, high rigidity can be ensured for the carcass layer 20, and steering stability can be enhanced.
When the intermediate elongation (2.0 cN/dtex) is greater than 4.0%, rigidity of the tire decreases, and steering stability is deteriorated. On the other hand, when the intermediate elongation (2.0 cN/dtex) is less than 3.0%, production of the organic fiber cord 40 is difficult.

The intermediate elongation (2.0 cN/dtex) can be measured as described below.
A sample cord piece of an organic fiber cord having a length that can be used in a tensile test which requires a test length of 10 cm (distance between chucks) is prepared. For the sample cord piece, two positions that correspond to the test length (distance between chucks) are colored to indicate the original length before the test and the length after the test. The sample cord piece is set to a tensile tester by adjusting the colored positions to a chuck distance of 10 cm, and tensile test is performed by applying a tensile force equivalent to 2.0 cN/dtex stipulated based on the fineness (dtex) of the sample cord at a rate of 300 $\pm$ 20 mm/min. The tensile test is performed in an atmosphere with a fixed condition of a temperature of 202°C $\pm$ 2°C and a relative humidity of 300 $\pm$ 2%. After the tensile force is released, the sample cord piece is removed, and the distance between the colored positions is determined. The intermediate elongation (%) is determined by using the measured value and the following equation. The intermediate elongation (%) is calculated to the first decimal place using the following equation.

$$\text{Elongation (\%)} = (\text{cord length after the tensile test/original cord length}) \times 100$$

The test is performed by setting n to 5. The average value thereof is determined and rounded off to the first decimal place, and this value is used as the elongation (%) of the sample.

The organic fiber cord 40 has a dimensional stability index of 5.0% to 6.5%. The dimensional stability index is represented as a sum of the dry heat shrinkage (%) at 150°C and the intermediate elongation (2.0 cN/dtex) (%). When the dimensional stability index of the organic fiber cord 40 is from 5.0% to 6.5%, steering stability can be ensured, and a tire can be stably produced.
When the dimensional stability index is greater than 6.5%, the size of the tire width becomes large. On the other hand, when the dimensional stability index is less than 5.0%, production of the organic fiber cord 40 is difficult. Since the method of determining the intermediate elongation (2.0 cN/dtex) (%) of the dimensional stability index is as described above, detailed explanation is omitted. The dry heat shrinkage (%) can be measured as described below.

An organic fiber cord having a fixed length ($L_0$) is left without load in an oven at 150°C for 30 minutes, and then the length of the organic fiber cord is measured. From the measured length (L) of the organic fiber cord, the dry heat shrinkage (%) is determined using the following equation.

$$\text{(Dry heat shrinkage)} = (L_0 - L)/L_0 \times 100 \text{ (\%)}$$

The organic fiber cord 40 has a difference $\delta$ between an elongation ratio $\varepsilon_{70}$ (%) at the strength $S_{70}$ (cN/dtex) which is 70% the strength Sr (cN/dtex) at the time of breaking and an elongation ratio $\varepsilon r$ (%) at the time of breaking in a strength-elongation curve represented by the strength (cN/dtex) and the elongation (%) shown in FIG. 3 of 11% to 16%. The tensile test is performed for the organic fiber cord 40 to obtain a strength-elongation curve. The difference $\delta$ described above can be determined from the obtained strength-elongation curve.

When the difference $\delta$ described above is from 11% to 16%, high toughness can be ensured, and external damage resistance of the tire side portion can be enhanced. When the difference $\delta$ described above is less than 11%, sufficient toughness cannot be achieved, and effect of enhancing external damage resistance of the tire side portion cannot be achieved. On the other hand, production of organic fiber cord 40 having the difference $\delta$ of greater than 16% is difficult.

The strength-elongation curve described above can be obtained by the tensile test described below. The tensile test is described below. In the tensile test, a sample cord piece of an organic fiber cord 40 having a length that can be used in a tensile test which requires a test length of 10 cm (distance between chucks) is prepared. For the sample cord piece, two positions that correspond to the test length (distance between chucks) are colored to indicate the original length before the test and the length after the test. The sample cord piece is set to a tensile tester by adjusting the colored positions to a chuck distance of 10 cm, and the tensile test is performed at a rate of 300 $\pm$ 20 mm/min in an atmosphere with a fixed condition of a temperature of 20°C $\pm$ 2°C and a relative humidity of 65 $\pm$ 2%. For the sample cord piece, since the original length before the test and the length after the test are marked as described above, the elongation of the sample cord piece can be determined.

Note that the organic fiber cord 40 that satisfies the physical properties including the intermediate elongation (2.0 cN/dtex), the dimensional stability index, and the difference $\delta$ described above can be produced by varying spinning speed, such as increasing the spinning speed of PET fibers.

The total linear mass density of the organic fiber cord 40 is, for example, from 2000 to 4500 dtex.

The organic fiber cord 40 preferably has a twist coefficient K of 1700 to 2100. When the twist coefficient K is from 1700 to 2200, high rigidity can be achieved while steering stability is ensured.

In the present invention, the twist coefficient K can be represented by the following equation. In the equation below, N is the number of twists (twist/10 cm) and D is the total linear mass density (dtex).

$$K = N \times D^{1/2}$$

The rubber layer 42 of the carcass layer 20 preferably has a storage modulus of 7.0 MPa to 9.0 MPa. By combining the organic fiber cord 40 having high rigidity described above with the rubber layer 42 having the storage modulus of 7.0 MPa to 9.0 MPa, even higher rigidity as the carcass layer 20 can be achieved, and steering stability can be further enhanced. Note that, when the storage modulus of the rubber layer 42 is less than 7.0 MPa, it is difficult to achieve high rigidity as the carcass layer 20, and effect of enhancement is small. On the other hand, when the storage modulus of the rubber layer 42 is greater than 9.0 MPa, the rigidity of the carcass layer 20 becomes excessively high, and thus the durability of the tire may be deteriorated.

In the tire 10 illustrated in FIG. 1, the rubber thickness ts of the side tread at the maximum width position 39a of the tire side 39 is preferably from 1.0 mm to 2.5 mm.

The maximum width position 39a (see FIG. 1) of the tire side 39 described above is a position indicating the maximum length in the tire lateral direction. In FIG. 1, the maximum width in the tire lateral direction is indicated by the sign Wm. The side tread is a region present in the range of 300 $\pm$ 30 (%) of the tire cross-sectional height SH in the tire radial direction using the maximum width position 39a of the tire as the center.

The rubber thickness ts of the side tread described above is a distance between the maximum width position 39a and the surface 20c of the carcass layer 20 in the tire lateral direction.

When the rubber thickness ts described above is greater than 2.5 mm, benefit of reduction in tire mass is reduced. On the other hand, when the rubber thickness ts described above is less than 1 mm, the carcass layer 20 may be exposed due to the wear caused by abrasion on the tire side surface.

Although an example using the organic fiber cord 40 as the reinforcing cord of the carcass layer 20 has been described, the organic fiber cord 40 is not limited to the reinforcing cord of the carcass layer 20 and can be used in the reinforcing cord of a tire skeleton portion constituting the skeleton of the tire. The carcass layer 20, the belt layer 22 (the inner side belt layer 22a and the outer side belt layer 22b), and the belt auxiliary reinforcing layer 24 are included in the tire skeleton portion. In addition to the carcass layer 20, the organic fiber cord 40 described above can be used as the reinforcing cord of the belt auxiliary reinforcing layer 24.

Also in this case, the rubber layer covering the organic fiber cord 40 preferably has a storage modulus of 7.0 MPa to 9.0 MPa as described above.

With the tire 10 of the present embodiment, use of the carcass layer 20 having the organic fiber cord 40 of the present embodiment can ensure external damage resistance of the tire side portion while steering stability is maintained. Furthermore, use of the carcass layer 20 having the organic fiber cord 40 of PET described above can ensure external damage resistance even when the tire side portion is made thin compared to the case where rayon is used for the reinforcing cord. Therefore, the thickness of the tire side portion can be reduced, thereby reducing the weight of the tire. Furthermore, since PET does not use carbon disulfide during its production, environmental impact during the production process can be reduced compared to the case of rayon.

As described above, the tire 10 of the present embodiment can ensure external damage resistance of the tire side portion while steering stability is maintained, can reduce the weight of the tire, and can reduce the environmental impact.

The present invention is basically configured as described above. The pneumatic tire of the present invention has been described in detail above. However, it should be understood that the present invention is not limited to the above embodiments, but may be improved or modified in various ways so long as these improvements or modifications remain within the scope of the present invention.

Examples

Examples of the pneumatic tire of the present invention is specifically described below.

In the present examples, pneumatic tires having a carcass layer configured as described in Tables 1 and 2 below of Examples 1 to 4, Comparative Examples 1 to 4, and Reference Example (hereinafter, each of the pneumatic tires is simply referred to as "tire") were produced. For each of the tires, tire mass was measured, and steering stability, external damage resistance of the tire (external damage resistance of the tire side portion), and durability performance of the tire were evaluated. The results for the tire mass, the steering stability, the external damage resistance of the tire, and the durability performance of the tire are shown in Tables 1 and 2 below. Note that the tire size of each tire was 205/55R16. In the carcass layers of Examples 1 to 4, Comparative Examples 1 to 4, and Reference Example, arrangements of organic fiber cords were all the same, and Ne 20 cotton yarn was used as the woof.

In the case where the organic fiber cords were PET, the characteristic values of the intermediate elongation, the dimensional stability index, and the difference between an elongation ratio at a strength at 70% the strength at the time of breaking and an elongation ratio at the time of breaking were adjusted by increasing the spinning speed of the PET fiber or the like.

In the rows of "Cord material" of Tables 1 and 2 below, the material of the organic fiber cord of the carcass layer is shown.

In the rows of "Cord structure" of Tables 1 and 2 below, "1670 dtex/2" indicates that two threads having the linear mass density of 1670 dtex had been twisted. "1840 dtex/2" indicates that two threads having the linear mass density of 1840dtex had been twisted.

For the tire mass, tires of Examples 1 to 4, Comparative Examples 1 to 4, and Reference Example were weighed using a balance. The tire mass was indicated as an index value with the tire mass of Reference Example expressed as an index value of 100.

Note that a smaller numerical value in the rows of "Tire mass" of Tables 1 and 2 below indicates a smaller weight.

The steering stability was measured and evaluated as described below.

Using each of the tires of Examples 1 to 4, Comparative Examples 1 to 4, and Reference Example, an actual vehicle was driven at 60 to 100 km/h on a test course having a flat circuit. A sensory evaluation was performed by three members of a professional panel for the steering characteristics during lane change and during cornering and stability during straight travel. Evaluation results were expressed as index values with the results of Reference Example expressed as index values of 100.

Note that a larger numerical value in the rows of "Steering stability" of Tables 1 and 2 below indicates superior steering stability.

The external damage resistance of the tire was measured and evaluated as described below.

The tires of Examples 1 to 4, Comparative Examples 1 to 4, and Reference Example were assembled on standard rims to mount the tires on a vehicle. After the tires were inflated to an air pressure of 200 kPa, the vehicle was driven over a curb having a height of 15 cm at a speed of 10 km/h and an angle of 30°, and this was repeated for 5 times. Then, for the tires of Examples 1 to 4, Comparative Examples 1 to 4, and Reference Example, the number of organic fiber cords of the carcass layer which had been damaged in the sidewall portion was counted. The number of the damaged organic fiber cords of the carcass layer was expressed as an index value with the result of Reference Example expressed as an index value of 100.

Note that a larger numerical value in the rows of "external damage resistance" of Tables 1 and 2 below indicates superior external damage resistance of the tire.

The durability performance of the tire was measured and evaluated as described below.

For the durability performance of the tire, a drum testing machine that had a smooth drum surface, that was formed from steel, and that had a diameter of 1707 mm was used in accordance with the durability performance test of JIS D 4230. Each of the tires of Examples 1 to 4, Comparative Examples 1 to 4, and Reference Example was mounted on a rim having a rim size of 18 × 8J and inflated to a test internal pressure of 230 kPa. Thereafter, each of the tires was run until broken while the ambient temperature was controlled to be 38 300 ± 3°C, the running speed was set to 81 km/h, and the applied load was increased from the maximum load of 85% stipulated by JATMA by 15% every 4 hours (to the final load of 280% and then run until broken). The length of the carcass separation of the tire side portion after the running was evaluated as an index value with the result of Reference Example expressed as an index value of 100. Note that a larger numerical value in the rows of "durability performance of tire" of Tables 1 and 2 below indicates superior carcass separation resistance and superior durability performance of the tire.

[Table 1]

|  | Example 1 | Example 2 | Example 3 | Example 4 |
|---|---|---|---|---|
| Cord material | PET | PET | PET | PET |
| Cord structure | 1670 dtex/2 | 1670 dtex/2 | 1670 dtex/2 | 1840 dtex/2 |
| Cord total linear mass density (dtex) | 3340 | 3340 | 3340 | 3680 |
| Number of carcass ply | 1 | 1 | 1 | 1 |
| Intermediate elongation (%) | 3.5 | 3.5 | 3.5 | 3.5 |
| Dimensional stability index (%) | 6.3 | 6.3 | 6.3 | 6.3 |
| Difference between an elongation ratio at a strength at 70% and an elongation ratio at the time of breaking (%) | 13.0 | 13.0 | 13.0 | 13.0 |
| Twist coefficient | 2000 | 2000 | 2000 | 2000 |
| Storage modulus (MPa) | 5.5 | 8.5 | 10.0 | 5.5 |
| Tire side gauge (mm) | 2.0 | 2.0 | 2.0 | 2.0 |
| Woof (cotton count) | 20 | 20 | 20 | 20 |
| Tire mass (index value) | 95 | 95 | 95 | 97 |
| Steering stability (index value) | 100 | 103 | 104 | 104 |
| External damage resistance of tire (index value) | 104 | 104 | 104 | 105 |
| Durability performance of tire (index value) | 102 | 102 | 100 | 100 |

[Table 2]

|  | Reference Example | Comparative Example 1 | Comparative Example 2 | Comparative Example 3 | Comparative Example 4 |
|---|---|---|---|---|---|
| Cord material | Rayon | Rayon | PET | PET | PET |
| Cord structure | 1840 dtex/2 | 1840 dtex/2 | 1670 dtex/2 | 1670 dtex/2 | 1670 dtex/2 |
| Cord total linear mass density (dtex) | 3680 | 3680 | 3340 | 3340 | 3340 |

(continued)

| | Reference Example | Comparative Example 1 | Comparative Example 2 | Comparative Example 3 | Comparative Example 4 |
|---|---|---|---|---|---|
| Number of carcass ply | 1 | 1 | 1 | 1 | 1 |
| Intermediate elongation (%) | 2.8 | 2.8 | 5.0 | 4.5 | 4.5 |
| Dimensional stability index (%) | 4.3 | 4.3 | 7.3 | 7.3 | 7.3 |
| Difference between an elongation ratio at a strength at 70% and an elongation ratio at the time of breaking (%) | 8.0 | 8.0 | 6.0 | 6.0 | 6.0 |
| Twist coefficient | 2900 | 2900 | 2200 | 2200 | 2200 |
| Storage modulus (MPa) | 5.5 | 5.5 | 5.5 | 5.5 | 8.5 |
| Tire side gauge (mm) | 3.0 | 2.0 | 2.0 | 2.0 | 2.0 |
| Woof (cotton count) | 20 | 20 | 20 | 20 | 20 |
| Tire mass (index value) | 100 | 95 | 95 | 95 | 95 |
| Steering Stability (index value) | 100 | 100 | 98 | 99 | 100 |
| External damage resistance of tire (index value) | 100 | 98 | 98 | 98 | 98 |
| Durability performance of tire (index value) | 100 | 100 | 102 | 102 | 102 |

For Example 1 shown in Table 1 above, the characteristic values of the intermediate elongation, the dimensional stability index, and the difference between an elongation ratio at a strength at 70% the strength at the time of breaking and an elongation ratio at the time of breaking were adjusted by increasing the spinning speed of the PET fiber or the like. As a result, the dimensional stability was enhanced, and the steering stability was ensured by imparting high rigidity. Furthermore, when the difference between an elongation ratio at a strength at 70% the strength at the time of breaking and an elongation ratio at the time of breaking is greater than those of Comparative Examples 1 to 4, the external damage resistance of the tire was enhanced. Example 1 achieved characteristic values that were equal to or greater than the values of Reference Example, in which rayon was used as the reinforcing cord, even though PET was used as the reinforcing cord. Furthermore, it was possible to make the tire side gauge (thickness of the tire side portion) thinner since the external damage resistance of the tire was ensured even when the tire side gauge was made thinner than that of Reference Example. Therefore, the weight of the tire was reduced.

Example 2 had the same characteristic values as those of the organic fiber cords of Example 1 but had even higher storage modulus of the rubber layer. As a result, the rigidity of the carcass layer became even higher, and the steering stability was further enhanced. Furthermore, it was possible to make the tire side gauge thinner since the external damage resistance of the tire was ensured even when the tire side gauge was made thinner than that of Reference Example. Therefore, the weight of the tire was reduced.

Example 3 had the same characteristic values as those of the organic fiber cords of Example 1 but had even higher storage modulus of the rubber layer, and Example 3 had even higher storage modulus of the rubber layer than that of Example 2. In Example 3, the rigidity of the carcass layer became even higher and the steering stability was enhanced; however, the storage modulus of the rubber layer was excessively high. Because of this, the rigidity of the carcass layer became excessively high, and the durability of the tire was lower than that of Example 2 due to compression fatigue although the durability was higher than that of Reference Example. Furthermore, it was possible to make the tire side gauge thinner since the external damage resistance of the tire was ensured even when the tire side gauge was made thinner than that of Reference Example. Therefore, the weight of the tire was reduced.

Example 4 used two organic fiber cords having the linear mass density of 1840 dtex and being formed from the same material as the organic fiber cords of Example 1, and thus had a higher total linear mass density. Example 4 had the high total linear mass density, and the steering stability was enhanced. The durability of the tire was approximately the same as that of Reference Example. Furthermore, it was possible to make the tire side gauge thinner since the external damage resistance of the tire was ensured even when the tire side gauge was made thinner than that of Reference Example.

Therefore, the weight of the tire was reduced.

Comparative Example 1 used rayon as the reinforcing cord and had the same thickness of the tire side gauge as that of Example 1. Because of this, exposure of the reinforcing cord was increased, thereby deteriorating the external damage resistance of the tire.

Comparative Examples 2, 3, and 4 used PET as the reinforcing cord; however, the intermediate elongation was high and the dimensional stability index was high. Because of this, the steering stability was deteriorated. Furthermore, the difference between an elongation ratio at a strength at 70% the strength at the time of breaking and an elongation ratio at the time of breaking to be smaller, and the external damage resistance of the tire was deteriorated.

Comparative Example 4 had higher storage modulus than those of Comparative Examples 2 and 3 and achieved even higher rigidity as the carcass layer and even higher steering stability than those of Comparative Examples 2 and 3.

Reference Signs List

10 Pneumatic tire (tire)
12 Tread portion
14 Shoulder portion
16 Sidewall portion
18 Bead portion
20 Carcass layer
22 Belt layer
22a Inner side belt layer
22b Outer side belt layer
24 Belt auxiliary reinforcing layer
26 Side reinforcing layer
28 Bead core
30 Bead filler
32 Tread rubber layer
34 Sidewall rubber layer
36 Rim cushion rubber layer
38 Innerliner rubber layer
40 Organic fiber cord
42 Rubber layer

**Claims**

1. A pneumatic tire comprising

   a tire skeleton portion in which a plurality of arranged reinforcing cords are covered by a rubber layer;
   the reinforcing cords being organic fiber cords formed from polyethylene terephthalate; and
   the organic fiber cords having
   an intermediate elongation (2.0cN/dtex) of 3.0% to 4.0%,
   a dimensional stability index, which is represented as a sum of a dry heat shrinkage (%) and an intermediate elongation (2.0 cN/dtex) (%) at 150°C, of 5.0% to 6.5%, and
   a difference between an elongation ratio at a strength at 70% the strength at the time of breaking and an elongation ratio at the time of breaking in a strength-elongation curve of 11% to 16%.

2. The pneumatic tire according to claim 1, wherein
   the organic fiber cord has a twist coefficient of 1700 to 2100.

3. The pneumatic tire according to claim 1 or 2, wherein
   the rubber layer has a storage modulus of 7.0 MPa to 9.0 MPa.

4. The pneumatic tire according to any one of claims 1 to 3, wherein
   a rubber thickness of a side tread at a maximum width position of a tire side is from 1.0 mm to 2.5 mm.

FIG. 1

EP 3 305 549 A1

FIG. 2

FIG. 3

## INTERNATIONAL SEARCH REPORT

| International application No. |
|---|
| PCT/JP2016/065284 |

**A. CLASSIFICATION OF SUBJECT MATTER**
*B60C9/00*(2006.01)i, *B60C9/04*(2006.01)i, *B60C13/00*(2006.01)i, *D02G3/26*(2006.01)i, *D02G3/48*(2006.01)i

According to International Patent Classification (IPC) or to both national classification and IPC

**B. FIELDS SEARCHED**

Minimum documentation searched (classification system followed by classification symbols)
B60C9/00, B60C9/04, B60C13/00, D02G3/26, D02G3/48

Documentation searched other than minimum documentation to the extent that such documents are included in the fields searched
Jitsuyo Shinan Koho            1922–1996   Jitsuyo Shinan Toroku Koho    1996–2016
Kokai Jitsuyo Shinan Koho      1971–2016   Toroku Jitsuyo Shinan Koho    1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 63-165547 A  (Toray Industries, Inc.), 08 July 1988 (08.07.1988), entire text (Family: none) | 1-4 |
| A | JP 4-251730 A  (Toyo Tire and Rubber Co., Ltd.), 08 September 1992 (08.09.1992), entire text (Family: none) | 1-4 |
| A | JP 4-222215 A  (Asahi Chemical Industry Co., Ltd.), 12 August 1992 (12.08.1992), entire text; all drawings & US 5547627 A      & US 5558935 A & EP 450607 A2      & DE 69127118 D & KR 10-1993-0003222 B  & TW 200535 B | 1-4 |

☒  Further documents are listed in the continuation of Box C.        ☐    See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 29 July 2016 (29.07.16) | 09 August 2016 (09.08.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

International application No.

PCT/JP2016/065284

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-334313 A  (The Yokohama Rubber Co., Ltd.), 07 December 1999 (07.12.1999), entire text (Family: none) | 1-4 |
| A | JP 60-185833 A  (Asahi Chemical Industry Co., Ltd.), 21 September 1985 (21.09.1985), entire text; all drawings (Family: none) | 1-4 |
| A | JP 2012-6563 A  (Bridgestone Corp.), 12 January 2012 (12.01.2012), entire text (Family: none) | 1-4 |
| A | JP 2014-524992 A  (Koron Industries Inc.), 25 September 2014 (25.09.2014), entire text & US 2015/0211150 A1    & WO 2013/048086 A2 & EP 2761068 A2          & KR 10-2013-0033789 A & CN 103827368 A | 1-4 |

Form PCT/ISA/210 (continuation of second sheet) (January 2015)

**EP 3 305 549 A1**

**REFERENCES CITED IN THE DESCRIPTION**

**Patent documents cited in the description**

- JP 3848763 B

- JP 2011011594 A

15